# EUROPEAN PATENT SPECIFICATION

(11) **EP 2 043 932 B1**
(45) Date of publication and mention of the grant of the patent: **27.07.2016**
(21) Application number: 07766327.6
(22) Date of filing: 20.07.2007
(51) Int. Cl.: B65G 69/18, B65G 65/40, B65D 90/58

(54) **SYSTEM FOR TRANSFERRING BULK MATERIAL TO AND FROM CONTAINERS**
SYSTEM ZUM ÜBERFÜHREN VON SCHÜTTGUT IN, BZW. AUS CONTAINERN
SYSTÈME POUR TRANSFÉRER DES MATÉRIAUX EN VRAC VERS ET DEPUIS DES CONTENEURS

(30) Priority: 26.07.2006 GB 0614824
(43) Date of publication of application: 08.04.2009
(73) Proprietor: Catalyst Handling Research & Engineering Limited, Bridgend CF31 3RD (GB)
(72) Inventor: SHEEHAN, Patrick, Gerrard, Bridgend CF31 3RD (GB)
(74) Representative: Davies, Gregory Mark
(86) International application number: PCT/GB2007/002768
(87) International publication number: WO 2008/012513

(56) References cited:
- EP-A- 1 251 088
- WO-A-96/23153
- DE-C- 595 796
- FR-A- 371 071
- FR-A- 2 632 284
- GB-A- 1 263 033
- GB-A- 2 329 178
- GB-A- 2 343 887
- GB-A- 2 362 151
- US-A- 2 874 733
- US-A- 4 182 591
- US-A- 4 359 176
- US-A- 5 490 546

## Description

The present invention relates to an assembly for reducing or eliminating the emission of dust when transferring bulk material to containers used for storing and transporting the material, and is particularly but not exclusively applicable to transferring and storing catalyst material typically in the form of pellets.

Containers often used for storing and transporting catalyst material, known as intermediate bulk containers or IBC's, comprise a rigid metal container the top of which has an entry opening, provided with a hinged lid. The container is filled through this entry opening, using a shute or spout and relying on gravity feed: the filling process displaces the air within the container and results in considerable emission of dust, in an uncontrolled manner, through the top opening of the container.

Such a known container also typically has an unloading opening in its bottom, which is closed by a slide plate. When unloading the container, the container is lifted into position above a catalyst bed to be loaded or above an open-top hopper into which the material is to be transferred, then the slide plate is pulled outwardly in order to uncover the bottom opening of the container: often, however, the slide plate jams due to the weight of the material above it and it becomes necessary to hammer the slide plate open; as with the filling process, the unloading process results in considerable emission of dust. With such known containers there is the problem that because there is displacement of air when transferring material to for example and IBC, aerosols of dust are 5 created. The inhalation or ingestion of any dust such as catalyst dust constitutes a health hazard, but some catalyst materials are not only toxic but can contain known carcinogens.

US 4,182,591 describes a bulk material handling system in which a conical collar is provided at the base of a filling tube, and suction is applied to the collar to evacuate air expelled from the filled vessel.

In accordance with the present invention, there is provided an assembly for reducing or eliminating the emission of dust when gravity-filling a container with bulk material through a tubular duct according to claim 1. The assembly comprises an annular collar for said 15 filling duct to extend through, and a suction duct for communicating suction to the annular space between said filling duct and inner periphery of said collar.

In use of this assembly, the air which is displaced from 20 the container, as filling proceeds, is withdrawn by the suction communicated to the annular space between the filling duct and the inner periphery of the collar: the dust which is entrained in this displaced air is also withdrawn by the applied suction. 25

Preferably the collar is arranged to fit into the entry opening in the top of the container, to prevent dust being emitted through any gap or space between the periphery of this entry opening and the underside or 30 outer periphery of the collar.

Preferably the inner periphery of the collar is formed with a chamber which extends part-way around the periphery of the collar and is open at its opposite, peripherally-directed ends, the suction duct communicating with this chamber. This arrangement is found to ensure a substantially even distribution of suction around the tubular filling duct.

The above-defined dust control assembly comprises a hopper, or so-called interceptor hopper, from which the container is filled, this hopper having an opening in its bottom to which the tubular filling duct for the container is coupled, and an entry port through which the hopper is filled by material conveyed from a source of such material by an air-flow. In particular, a suction pipe is coupled to the interior of the hopper, at or adjacent its top, and the suction applied to this pipe promotes the flow of air into the hopper, carrying the material with which the hopper fills. Valve means are provided to interrupt the application of suction to the interior of the hopper, and instead apply it to the annular dust control collar, when the material is being transferred from the hopper to the container.

The valve means comprises a first diverter valve connecting the suction pipe to the suction source and a flexible duct connecting the annular collar to the suction pipe via a second diverter valve , wherein the first and second diverter valves are configured such that when the first valve is open and the second valve is closed suction is applied to the hopper, and when the first valve is closed and the second valve is open suction is applied to the annular collar to withdraw air displaced from the container and dust entrained in the air.

Preferably a supporting structure is provided for supporting the interceptor hopper, whilst enabling a container to be put into position under the hopper. Preferably this supporting structure includes a walkway on which an operator may climb to operate the valve means of the interceptor hopper.

According to an aspect not forming part of the present invention there is provided an assembly for displacing a slide plate to uncover an unloading opening in the bottom of a container, the assembly comprising an element for engaging the slide plate and an hydraulically-powered actuator for displacing said element to displace said slide plate.

Preferably this assembly comprises a pair of attachment arms arranged for insertion into a pair of fork lift sockets with which the container is provided, at or adjacent its bottom. Preferably the assembly further comprises a cross-bar or other supporting structure extending between the pair of attachment arms and against which the hydraulically powered actuator acts. Preferably the assembly further comprises a slider mounted to the cross-bar or other supporting structure, the slider being arranged for displacement by the hydraulic actuator and carrying the element which, in use, engages the slide plate of the container.

This hydraulically-powered assembly serves to displace the slide plate of the container smoothly and without sudden movements or vibrations which would be liable to give rise to dust emissions.

According to a non-claimed aspect there is provided an unloading hopper for a container having an unloading opening in its bottom, the unloading hopper having a supporting structure for the container and having an open top arranged to mate with the container at or adjacent its bottom and along its rear and opposite sides, and providing access at the front to a slide plate covering said unloading opening of the container.

The top of the unloading hopper may be provided with a seal, along its rear and opposite sides, which mates against the bottom of the container. Instead of this mating seal, a flexible skirt may be provided, to seal against the container along its rear and opposite sides.

The arrangement of the unloading hopper is such that the replacement air, required by the container as unloading proceeds, is unable to enter between the container and hopper along their rear or opposite sides, but is constrained to entering along the front, and so reduces or eliminates the emission of dust.

Embodiments of the present invention will now be described by way of examples only and with reference to the accompanying drawings, in which:
Figure 1 is a view showing an interceptor hopper for use in transferring bulk material into an intermediate bulk container, and a support frame for the interceptor hopper;
Figure 2 is another view of the interceptor hopper when rested on its support frame, and showing an intermediate bulk container in position to receive material from the interceptor hopper;
Figure 3 is a view of a dust control assembly used when transferring bulk material from the interceptor hopper to the intermediate bulk container;
Figure 4 is a view of an hydraulically-powered assembly for opening the slide plate of the intermediate bulk container; not forming part of the present invention;
Figure 5 is a view of an unloading hopper for the intermediate bulk container, not forming part of the present invention;
Figure 6 is a view of the hydraulically-powered opening assembly for the container slide plate, shown when the container is rested on the unloading hopper and the opening assembly is attached to the container, also not forming part of the present invention.

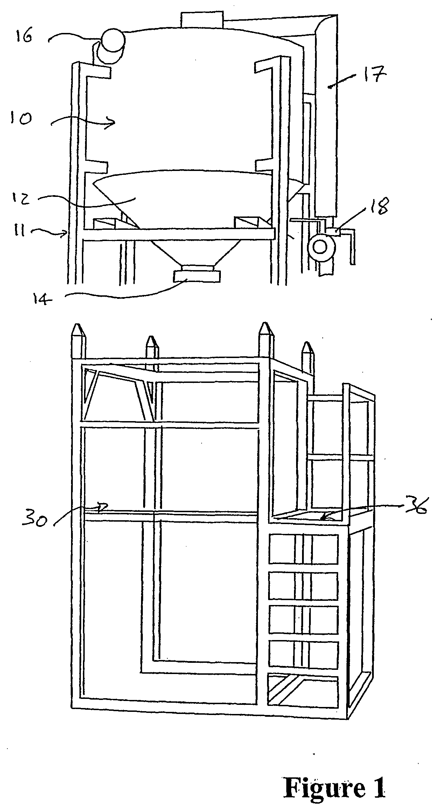

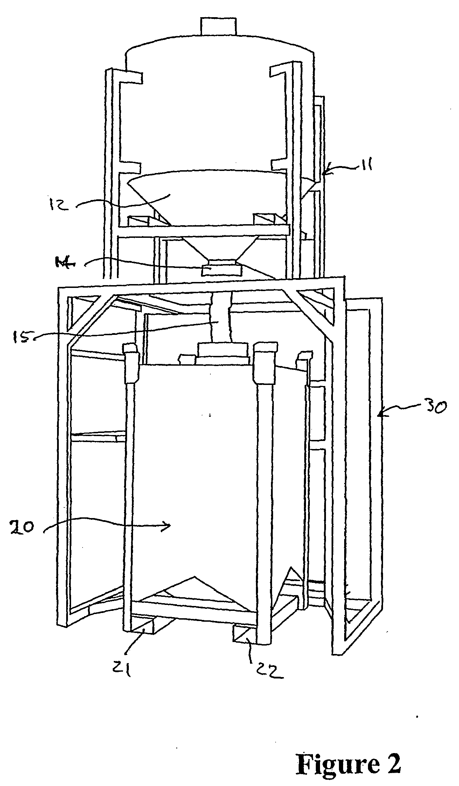

Referring to Figures 1 and 2 of the drawings, there is shown a hopper 10, known as an interceptor hopper, for use in transferring bulk material to a container 20, and a support frame 30 for the interceptor hopper. The container 20, known as an intermediate bulk container, comprises a rigid metal container which is square in cross-section and the top of which has an entry opening, provided with a hinged lid: at its bottom, the container has a pair of sockets 21,22 to receive the lifting forks of a fork lift truck. The support frame 30 is open at its front, to enable the forklift truck to lift the container 20 into position, as shown in Figure 2, for filling, and thereafter to remove the filled container.

The interceptor hopper 10 is mounted to its own sub-frame 11, which in use rests on the top of the support frame 30. The interceptor hopper 10 has a tapered bottom 12 formed with an opening which is provided with a slide valve 14, and to which a tubular outlet tube 15 is connected: this outlet tube, or sock, is formed of flexible material and its lower end is inserted into the entry opening in the top of the container 20. The interceptor hopper 10 has a tangential entry port 16 adjacent it top and also has a suction pipe 17 coupled to its top and extending down its side, for connection to a vacuum source (not shown) via a first diverter valve 18.

A dust control cowl 32 is provided, in the form of an annular collar which fits into the entry opening in the top of the container 20 and through which the filling sock 15 extends: a chamber 33 is formed on the inner side of the collar, to extend part way round its circumference, with its opposite ends open, and a flexible duct 34 is coupled at one end to the chamber 33 of the cowl and at its other end to the end of the suction pipe 17, via a second diverter valve 35. The support frame 30 for the hopper includes a walkway 36 for an operator to climb onto for controlling the diverter valves 18,35.

In use, the interceptor hopper 10 is first filled with catalyst or other bulk material conveyed to it from a source of such material, then the material in the interceptor hopper 10 is transferred into the intermediate bulk container 20. In the first phase, the slide valve 14 at the bottom of the interceptor hopper 10 is closed, the first diverter valve 18 is opened and the second diverter valve 35 is closed. The vacuum source is energised to withdraw air from the interceptor hopper 10 and bulk material is conveyed into the hopper, in an airflow, via a duct coupled to its entry port 16. In the second phase, the first diverter valve 18 is closed, the second diverter valve 35 is opened and the slide valve 14 of the hopper 10 is opened. The bulk material now feeds under gravity from the interceptor hopper 10 and into the intermediate bulk container 20, whilst the vacuum source applies suction to the annular space between the cowl 32 and the sock 15, thus withdrawing the air being displaced from the container 20, and also the dust entrained in this air. The cowl 32 serves to distribute the suction substantially evenly around the full circumference of the sock 15 and substantially eliminates the emission of dust through the top of the container 20.

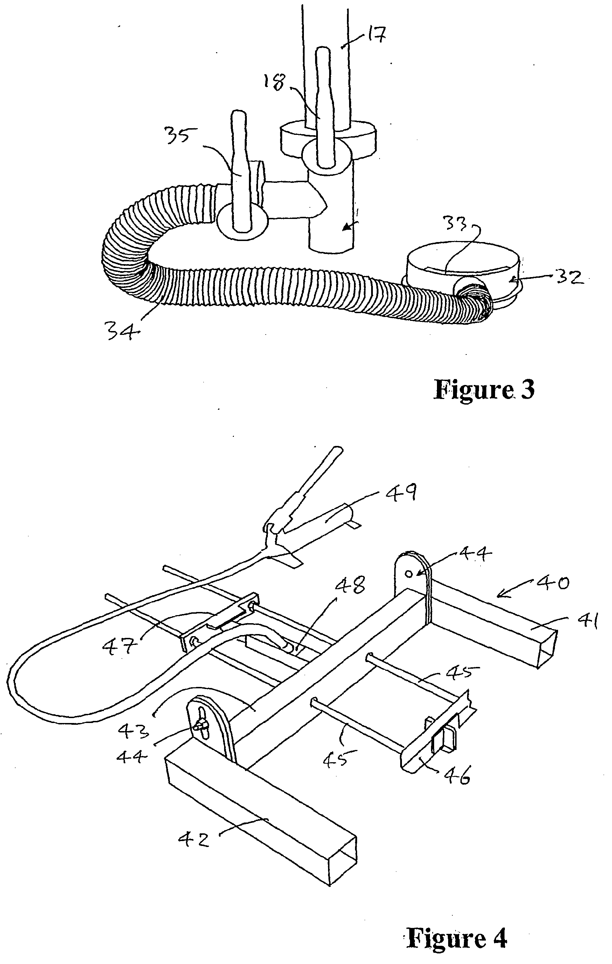

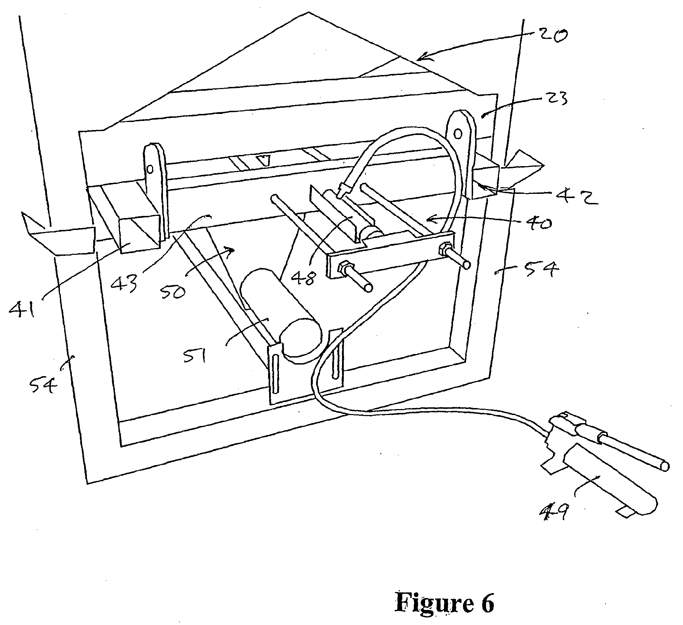

The bottom of the intermediate bulk container 20 is formed with an opening which is closed by a slide plate (not shown), which must be pulled outwardly in order to uncover the opening for unloading the container: as mentioned previously, this slide plate is liable to jam due to the weight of the bulk material above it. Referring to Figure 4, there is shown an hydraulically-powered assembly 40 for displacing the slide plate to uncover the bottom opening of the intermediate bulk container 20. The assembly 40 comprises a pair of arms 41, 42 connected by a cross-bar 43, the arms 41, 42 being arranged for insertion into the pair of sockets 21, 22 provided, at the bottom of the intermediate bulk container 20, to receive the lifting forks of a fork lift truck. The cross-bar 43 has an upstanding bracket 44 at each of its ends, which enables adjustment of the height of the cross-bar 43 relative to the arms 41, 42, and also abuts a cross-bar 23 at the front of the container (see Figure 6) to limit the insertion of the arms 41, 42 into the sockets 21, 22. A pair of tie rods 45, 45 extend through the cross-bar 43 of the assembly and a first bar 46 is fixed across them at their forward ends, forming a hook to engage the slide plate of the container20, and a second bar 47 is fixed across them on the other side of the cross-bar 43. A hydraulic linear actuator 48 is connected between the cross-bar 43 and the second bar 47 and is coupled to a manually-operated pump 49.

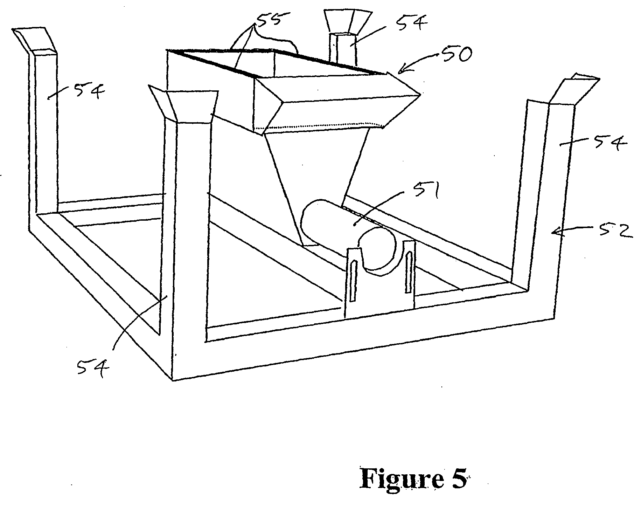

Figure 5 shows an unloading hopper 50 for use with the intermediate bulk container 20, this hopper having an open top and a forwardly-directed outlet port 51 at its bottom. The unloading hopper 50 is mounted to a frame 52 which has four upwardly-projecting arms 54, for supporting the intermediate bulk container 20. In use, and as shown in Figure 6, the container 20 is lifted into position, for its bottom corners to rest on the tops of the arms 54 of the hopper frame 52: the top of the hopper is formed with a seal 55, along its rear and along its opposite sides, to mate against the bottom of the container 20, but leaving the front open for access to the slide plate of the container.

Figure 6 also shows the hydraulically-operated assembly 40 for opening the slide plate of the container, fitted into position: by operating the pump 49, the hydraulic actuator 48 is extended and the slide plate of the container is correspondingly pulled outwardly, to uncover the bottom opening of the container and allow the bulk material to feed under gravity into the hopper. During this process, the replacement air for the container 20 enters only through the front, any gaps between the bottom of the container 20 and the top of the unloading hopper 50 being closed by the mating seal along the rear and opposite sides. Instead of this mating seal, a flexible skirt may be provided on the top of the hopper 50, along its rear and opposite sides.

It will be appreciated that the system and assemblies, which have been described enable dust emissions, arising when transferring catalyst or other bulk material to or from containers, to be substantially reduced or eliminated.

## Claims

1. An assembly for reducing or eliminating the emission of dust when gravity-filling a container with bulk material through a tubular filling duct (15), the assembly comprising:
the tubular filling duct (15),
a hopper (10) having an entry port through which it is filled and an opening at its bottom to which the tubular filling duct (15) is connected from which the container is filled,
an annular collar (32) through which said filling duct (15) extends;
a suction duct (34) for communicating suction to the annular space between said tubular filling duct (15) and inner periphery of said collar (32);
a suction pipe (17) coupled to the interior of the hopper (10) arranged such that suction applied to this pipe promotes the flow of air into the hopper (10), carrying the material with which the hopper (10) fills;
**characterised by** a first diverter valve (18) connecting the suction pipe (17) to the suction source, further **characterised in that** the suction duct (34) connecting the annular collar (32) to the suction pipe (17) via a second diverter valve (35), wherein the first (18) and second (35) diverter valves are configured such that when the first valve (18) is open and the second valve (35) is closed suction is applied to the hopper (10), and when the first valve (18) is closed and the second valve (35) is open suction is applied to the annular collar (32) to withdraw air displaced from the container and dust entrained in the air.

2. An assembly according to claim 1, the collar (32) is arranged to fit into the entry opening in the top of the container, to prevent dust being emitted through any gap or space between the periphery of this entry opening and the underside or outer periphery of the collar (32).

3. An assembly according to any preceding claim, in combination with a supporting structure, which supports the interceptor hopper (10), whilst enabling a container to be put into position under the hopper.

4. An assembly according to claim 3, including a walkway on which an operator may climb to operate the valve means of the interceptor hopper (10).

5. An assembly according to claim 4, wherein the walkway is hingedly connected to the supporting structure at least one end so that the walkway can be raised and lowered.

## Patentansprüche

1. Anordnung zum Verringern oder Eliminieren von Staubausstoß während des Befüllens eines Behälters mit Schüttgut durch einen schlauchförmigen Einfüllkanal (15) mittels Schwerkraft, umfassend:
den schlauchförmigen Einfüllkanal (15),
einen Einfülltrichter (10) mit einer Eingangsmündung, durch die der Einfülltrichter (10) befüllt wird und einer an dem Boden des Einfülltrichters (10) angeordneten Öffnung, mit der der schlauchförmige Einfüllkanal (15) verbunden ist, aus dem der Behälter befüllt wird,
eine ringförmige Manschette (32), durch die sich der Einfüllkanal (15) erstreckt,
einen Saugkanal (34) zum Übertragen eines Sogs in den ringförmigen Raum zwischen dem schlauchförmigen Einfüllkanal (15) und einem inneren Randbereich der Manschette (32),
ein Saugrohr (17), das mit dem Inneren des Einfülltrichters (10) verbunden ist und so angeordnet ist, dass ein auf das Rohr aufgebrachter Sog den Luftstrom in den Einfülltrichter (10) fördert, der das Material mit dem der Einfülltrichter (10) zu befüllen ist, mitführt,
**gekennzeichnet durch** ein erstes Umlenkventil (18), das das Saugrohr (17) mit der Sogquelle verbindet, und des Weiteren **dadurch** gekennzeichnet, dass der Saugkanal (38) die ringförmige Manschette (32) mit dem Saugrohr (17) über ein zweites Umlenkventil (35) verbindet, wobei das erste (18) und zweite (35) Umlenkventil dazu konfiguriert sind, dass ein Sog auf den Einfülltrichter (10) wirkt, wenn das erste Ventil (18) geöffnet und das zweite Ventil (35) geschlossen ist, und, wenn das erste Ventil (18) geschlossen und das zweite Ventil (35) geöffnet ist, ein Sog auf die ringförmige Manschette (32) wirkt, um aus dem Behälter verdrängte Luft und in der Luft mitgeführten Staub zu entziehen.

2. Anordnung nach Anspruch 1, wobei die Manschette (32) zum Passen in die Zuführöffnung im oberen Ende des Behälters eingerichtet ist, um zu verhindern, dass Staub durch eine Lücke oder einen Raum zwischen dem Randbereich der Zugangsöffnung und der Unterseite oder eines äußeren Randbereichs der Manschette (32) austritt.

3. Anordnung nach einem der vorstehenden Ansprüche in Kombination mit einer Tragstruktur, die den Auffangtrichter (10) trägt und ermöglicht, einen Behälter unterhalb des Trichters zu stellen.

4. Anordnung nach Anspruch 3, die einen Laufsteg aufweist, den ein Bediener besteigen kann, um die Ventilmittel des Auffangtrichters (10) zu bedienen.

5. Anordnung nach Anspruch 4, wobei der Laufsteg gelenkig mit der Tragstruktur an wenigstens einem Ende verbunden ist, sodass der Laufsteg angehoben und abgesenkt werden kann.

## Revendications

1. Ensemble pour réduire ou éliminer l'émission de poussière lors du remplissage, par gravité, d'un contenant avec un matériau en vrac à travers une conduite de remplissage tubulaire (15), l'ensemble comprenant :
la conduite de remplissage tubulaire (15),
une trémie (10) possédant un orifice d'entrée à travers lequel elle est remplie et une ouverture, dans son fond, à laquelle la conduite de remplissage tubulaire (15) est raccordée, à partir de laquelle le contenant est rempli,
un collier annulaire (32) à travers lequel ladite conduite de remplissage (15) s'étend ;
une conduite d'aspiration (34) pour communiquer une aspiration à l'espace annulaire entre ladite conduite de remplissage tubulaire (15) et la périphérie intérieure dudit collier (32) ;
un tuyau d'aspiration (17) accouplé à l'intérieur de la trémie (10), agencé de telle sorte que l'aspiration appliquée sur ce tuyau favorise l'écoulement d'air dans la trémie (10), transportant le matériau avec lequel la trémie (10) se remplit ;
**caractérisé par** une première valve de diversion (18) raccordant le tuyau d'aspiration (17) à la source d'aspiration, **caractérisé en outre en ce que** la conduite d'aspiration (34) raccorde le collier annulaire (32) au tuyau d'aspiration (17) par l'intermédiaire d'une seconde valve de diversion (35), dans lequel les première (18) et seconde (35) valves de diversion sont configurées de telle sorte que, lorsque la première valve (18) est ouverte et la seconde valve (35) est fermée, une aspiration soit appliquée sur la trémie (10), et, lorsque la première valve (18) est fermée et la seconde valve (35) est ouverte, une aspiration soit appliquée sur le collier annulaire (32) pour aspirer de l'air déplacé à partir du contenant et de la poussière entraînée dans l'air.

2. Ensemble selon la revendication 1, le collier (32) est agencé pour s'ajuster dans l'ouverture d'entrée dans le haut du contenant, pour empêcher de la poussière d'être émise à travers un quelconque écart ou espace entre la périphérie de cette ouverture d'entrée et le côté inférieur ou la périphérie extérieure du collier (32).

3. Ensemble selon une quelconque revendication précédente, en association avec une structure de support, qui supporte la trémie d'interception (10), tout en permettant à un contenant d'être mis en position sous la trémie.

4. Ensemble selon la revendication 3, incluant une passerelle sur laquelle un opérateur peut monter pour faire fonctionner les moyens à valve de la trémie d'interception (10).

5. Ensemble selon la revendication 4, dans lequel la passerelle est raccordée de façon articulée à la structure de support à au moins une extrémité pour que la passerelle puisse être levée et abaissée.
